# EUROPEAN PATENT SPECIFICATION

(11) **EP 3 484 006 B1**
(45) Date of publication and mention of the grant of the patent: **30.11.2022**
(21) Application number: 18205569.9
(22) Date of filing: 12.11.2018
(51) Int. Cl.: H02J 3/30, H02K 7/02

(54) **STABILIZER APPARATUS FOR ELECTRIC MACHINES OPERATING UNDER VACUUM WITH HYDRAULIC ROTARY SEAL**
STABILISIERUNGSGERÄT VON ELEKTRISCHEN MASCHINEN ZUM BETRIEB UNTER VAKUUM MIT HYDRAULISCHER DREHDICHTUNG
APPAREIL STABILISATEUR POUR MACHINES ELECTRIQUES FONCTIONNANT SOUS VIDE AVEC UN JOINT ROTATIF HYDRAULIQUE

(30) Priority: 13.11.2017 IT 201700128919
(43) Date of publication of application: 15.05.2019
(73) Proprietor: Criotec Impianti S.p.A., 10034 Chivasso (Torino) (IT)
(72) Inventor: ROVETA, Guido, I-10037 TORRAZZA PIEMONTE (Torino) (IT)
(74) Representative: Gerbino, Angelo

(56) References cited:
- EP-A1- 3 056 736
- US-A- 4 825 718
- US-A1- 2014 124 172

## Description

The present invention refers to a stabilizing apparatus for electric machines, in particular of the synchronous type.

Such apparatuses stabilize the grid frequency to deal with momentary imbalances between available and required electrical power, which are increasingly likely to occur due to the continuous increase in power demand and the increasingly substantial contribution of non-programmable renewable sources.

An essential component of such apparatuses is a flywheel which, once connected to the rotor shaft of an electric machine, regulates its speed by the inertia of its rotating mass.

EP 3 056 736 A1 describes a stabilizing apparatus having the general characteristics indicated in the preamble to claim 1 below. According to such document, a sealing liquid is fed by a channel orthogonal to the rotary shaft in a space existing between a pair of adjacent sealing lips and fills the axial space between the lips and the shaft.

US 2014/124 172 A1 describes a device for cooling a flywheel, which uses a diathermic liquid having as its only function to facilitate heat exchange.

US 4 825 718 A describes a torsional vibration damper with a frequency of less than 100 Hz, and therefore belonging to this specific and limited technical field. Such damper comprises an annular hub and a rotating ring surrounding the annular hub and coaxial with this latter.

One object of the present invention is to improve the performance of known apparatuses of the type indicated above, and in particular to reduce their energy consumption and facilitate their maintenance.

According to the invention, such object is achieved by a stabilizing apparatus according to claim 1.

Preferred embodiments of the apparatus of the invention are described specifically in the dependent claims hereinafter.

The flywheel of the apparatus of the invention rotates in a vacuum chamber, for example held at a pressure of only 100 Pa, namely in conditions that substantially reduce friction with the air and the consequent degradation of mechanical energy into heat, thus significantly reducing energy consumption and eliminating the need for complex cooling systems.

The rotating sealing means of the apparatus of the invention, which are arranged at the end portions of the flywheel shaft, minimize the entry of air into the chamber with a further reduction in energy consumption necessary to maintain the desired vacuum level.

Such sealing means are subject to very little deterioration over time and allow maintenance to be carried out without interrupting normal operation. Such prerogatives are extremely advantageous considering that the apparatuses of the invention are typically mounted on electric machines that are part of national and transnational grids for the transport of electrical energy, which are in continuous operation 24 hours a day, 365 days a year.

A further object of the present invention is an electric machine comprising a stabilizing apparatus of the type described above.

Further advantages and features of the present invention will become apparent from the detailed description that follows, provided by way of non-limiting example with reference to the accompanying drawings, wherein:

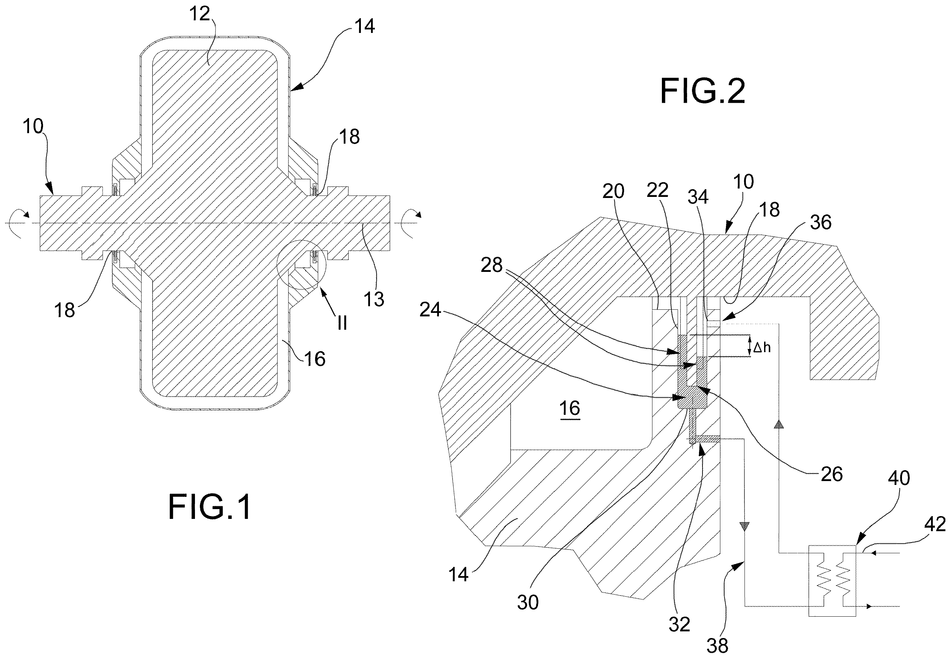

figure 1 is a schematic view in elevation and in cross-section of an apparatus of the invention, and
figure 2 is a magnified scale view of a detail of the apparatus of the invention of figure 1.

A stabilizing apparatus for an electric machine comprises a rotary shaft 10, typically having a diameter between 200 and 600 mm and having a flywheel 12 attached to its central portion, in particular rigidly fixed or integral. The shaft 10 has a longitudinal axis of symmetry which is indicated by the reference number 13.

A fixed casing 14 in the form of a hollow disk encloses the flywheel 12 in a chamber 16 which, by means of one or more conventional pumps, not illustrated, is kept under vacuum. The casing 14, moreover, has in the central portion thereof, which has a thickened wall, two circular and aligned holes 18 for the respective end portions of the shaft 10 to pass through.

In an edge 20 extending axially from each hole 18, a respective circumferential groove 22 is made wherein there is oil 24 (or, in other forms of implementation of the invention, a different sealing liquid) and within which a ring 26, attached to the respective end portion of the shaft 10 and provided with a plurality of protruding fins 28, is free to rotate. Equivalent embodiments of the invention (not shown in the figures) use an opposite constructive solution where a circumferential groove, in which oil 24 is present, is obtained in the end portion of the shaft 10 facing the edge 20 of each hole 18, and in such grooves a ring attached to the edge 20 of the respective hole 18 is free to rotate.

In any case, the rings 26 and grooves 22 have a general plane or position substantially orthogonal to the longitudinal axis 13 of the rotary shaft 10.

As will be illustrated in greater detail in the following description of operation, the rotation of the rings 26 in the oil 24 in the respective grooves 22 determines a rotary hydraulic seal between the vacuum chamber 16 and the external environment at atmospheric pressure. Each groove 22 also has an outlet opening 30 for oil 24 on the bottom towards a first conduit 32 in the wall of the casing 14 and, near the mouth, an inlet opening 34 for oil 24 originating from a second conduit 36. The conduits 32, 36 are part of a flow circuit 38 of the oil 24 through a heat exchanger 40 providing an additional separate circuit 42 for the flow of an additional fluid, such as water, for cooling the oil 24.

To enable the apparatus described above to operate, the end portions of the shaft 10 are mounted, in a manner known per se and not illustrated in the figures, on respective bearings thereof and connected to the rotor shaft of an electric machine.

This latter rotor rotates at high speeds of the order of 3000 rpm and thus rotates the shaft 10 with the flywheel 12 which, due to its inertial mass, regularizes the speed of rotation of the entire rotor.

As already mentioned, one or more vacuum pumps establish a very low pressure in the chamber 16, thus substantially reducing the friction forces that oppose the rotation of the flywheel 12, and thus the dissipation of mechanical energy into heat.

The rotation of the shaft 10 also determines the rotation of the rings 26 attached/integral thereto, which, by means of the fins 28, rotate the oil 24 in the respective grooves 22. In this way, at the bottom of the grooves 22 and around the distal portion of each ring 26, a circular crown of oil 24 is formed, driven by centrifugal force and having a cross-section shaped like a U with arms having different heights (Δh). This compensates for the difference in pressure between the chamber 16 and the external environment, which is approximately equal to the atmospheric pressure, and the oil 24 creates a rotating hydraulic seal that substantially prevents the entry of external air into the chamber 16 through the holes 18.

The centrifugal effect generated by the rotation of the rings 26 also pushes the oil 24 contained in each groove 22 towards the outlet opening 30 and the conduit 32, from which it flows into the circuit 38. In this way, the oil 24 passes through the heat exchanger 40, where it is cooled by the water flowing in the circuit 42. The oil 24, once cooled, then flows back into the grooves 22 through the conduit 36 and the opening 34.

Due to this circulation of the oil 24, which takes place without the help of external pumps and therefore without substantially increasing the energy consumption of the apparatus, the heat generated by friction between the oil 24 and the walls of the grooves 22 during the rotation of the shaft 10, even in the absence of metal parts in contact, is removed.

The apparatus described above therefore makes it possible to create within chamber 16 within which the flywheel 12 rotates, a vacuum corresponding to absolute pressures even lower than 100 Pa according to the vapor tension of the oil 24, dissipating little power and providing very high reliability and durability over time.

Naturally, without altering the principle of the invention, the details of implementation and embodiments may vary widely with respect to those described purely by way of example, without thereby departing from the scope of the invention as defined in the accompanying claims. For example, the absolute pressures in the chamber wherein the flywheel rotates may be varied as desired. Moreover, the various components of the apparatus of the invention could also be supplied disassembled as a kit to be directly mounted by the end user on the electric machine of which the frequency is to be stabilized.

## Claims

1. An apparatus for stabilizing an electric machine which is part of a grid for the transport of electric energy, comprising:
- a rotary shaft (10) having a flywheel (12) fixed to the central portion thereof,
- a casing (14) enclosing said flywheel (12) and having two holes (18) for the respective end portions of said shaft (10) to pass through,
- a vacuum chamber (16), in which said flywheel (12) is enclosed by said casing (14), and
- means providing a rotating hydraulic sealing at said holes (18) for the end portions of the shaft (10) to pass through, such means using a liquid (24) to provide sealing,
said apparatus being **characterized in that** in an axially extending edge (20) of each hole (18), or in a portion of the shaft end (10) facing each edge (20), a circumferential groove (22) is made wherein said sealing liquid (24) is and within which a ring (26) attached to said portion of the shaft end (10), or to said edge (20), respectively, is free to rotate.

2. Apparatus according to claim 1, wherein said sealing liquid (24) is oil.

3. Apparatus according to claim 1 or 2, wherein a plurality of fins (28) protrudes from said ring (26).

4. Apparatus according to any one of the preceding claims, wherein said casing (14) is shaped as a centrally perforated hollow disk and has a thickened wall extending around each hole (18).

5. Apparatus according to any one of the preceding claims, wherein the diameter of said shaft (10) is between 200 and 600 mm.

6. Apparatus according to any one of the preceding claims, comprising a cooling device for said sealing liquid (24).

7. Apparatus according to claim 6, wherein the circulation of the sealing liquid (24) in said cooling device is due to the centrifugal effect generated by the rotation of the ring (26) within the groove (22).

8. Apparatus according to claim 6 or 7, wherein said groove (22) has an opening (30) for the outlet of the sealing liquid (24) in a first conduit (32) made in the wall of the casing (14) and an opening (34) for the inlet the sealing liquid (24) originating from a second conduit (36), said conduits (32, 36) being part of a flow circuit (38) of the sealing liquid (24) through a heat exchanger (40).

9. Apparatus according to any one of the preceding claims, wherein said rings (26) and said circumferential grooves (22) lie in planes substantially orthogonal to a longitudinal axis (13) of the rotary shaft (10).

10. Apparatus according to any one of the preceding claims, wherein, due to the rotation of the shaft (10), a circular crown of sealing liquid (24) is formed at the bottom of the grooves (22) and around the distal portion of each ring (26), driven by centrifugal force with a cross-section shaped like a U, the arms of which have different heights (Δh).

11. An electric machine which is part of a grid for the transport of electric energy and comprises a stabilizing apparatus according to any one of the preceding claims.

## Patentansprüche

1. Vorrichtung zum Stabilisieren einer elektrischen Maschine, die Teil eines Netzes für den Transport elektrischer Energie ist, mit:
- einer Drehwelle (10), die ein Schwungrad (12), das an dem zentralen Abschnitt davon befestigt ist, aufweist,
- einem Gehäuse (14), das das Schwungrad (12) umschließt und zwei Löcher (18) für die jeweiligen Endabschnitte der Welle (10) zum Hindurchverlaufen aufweist,
- einer Vakuumkammer (16), in der das Schwungrad (12) durch das Gehäuse (14) umschlossen ist, und
- einem Mittel, das eine sich drehende Hydraulikdichtung an den Löchern (18) für die Endabschnitte der Welle (10) zum Hindurchverlaufen vorsieht, bei denen das derartige Mittel eine Flüssigkeit (24) zum Vorsehen einer Abdichtung verwendet,
bei der die Vorrichtung **dadurch gekennzeichnet ist, dass** in einem sich axial erstreckenden Rand (20) jedes Lochs (18) oder in einem Abschnitt des Wellenendes (10), der dem jeweiligen Rand (20) zugewandt ist, eine umfängliche Nut (22) ausgebildet ist, in der die Dichtungsflüssigkeit (24) ist, und innerhalb derer ein Ring (26), der an dem Abschnitt des Wellenendes (10) bzw. an dem Rand (20) angebracht ist, frei ist, sich zu drehen.

2. Vorrichtung nach Anspruch 1, bei der die Dichtungsflüssigkeit (24) Öl ist.

3. Vorrichtung nach Anspruch 1 oder 2, bei der eine Mehrzahl von Lamellen (28) von dem Ring (26) vorsteht.

4. Vorrichtung nach einem der vorhergehenden Ansprüche, bei der das Gehäuse (14) als eine zentral perforierte hohle Scheibe geformt ist und eine verdickte Wand, die sich um jedes Loch (18) herum erstreckt, aufweist.

5. Vorrichtung nach einem der vorhergehenden Ansprüche, bei der der Durchmesser der Welle (10) zwischen 200 und 600 mm ist.

6. Vorrichtung nach einem der vorhergehenden Ansprüche, mit einer Kühleinrichtung für die Dichtungsflüssigkeit (24).

7. Vorrichtung nach Anspruch 6, bei der die Zirkulation der Dichtungsflüssigkeit (24) in der Kühleinrichtung auf der Zentrifugalwirkung, die durch die Drehung des Rings (26) innerhalb der Nut (22) erzeugt wird, beruht.

8. Vorrichtung nach Anspruch 6 oder 7, bei der die Nut (22) eine Öffnung (30) für den Auslass der Dichtungsflüssigkeit (24) in einem ersten Kanal (32), der in der Wand des Gehäuses (14) ausgebildet ist, und eine Öffnung (34) für den Einlass der Dichtungsflüssigkeit (24), die aus einem zweiten Kanal (36) austritt, aufweist, bei der die Kanäle (32, 36) Teil eines Strömungskreislaufs (38) der Dichtungsflüssigkeit (24) durch einen Wärmetauscher (40) sind.

9. Vorrichtung nach einem der vorhergehenden Ansprüche, bei der die Ringe (26) und die umfänglichen Nuten (22) in Ebenen im Wesentlichen orthogonal zu einer Längsachse (13) der Drehwelle (10) liegen.

10. Vorrichtung nach einem der vorhergehenden Ansprüche, bei der aufgrund der Drehung der Welle (10) ein kreisförmiger Wirbel der Dichtungsflüssigkeit (24) an dem Boden der Nuten (22) und um den distalen Abschnitt jedes Rings (26) herum, der durch Zentrifugalkraft angetrieben wird, mit einem Querschnitt, der wie ein U geformt ist, dessen Arme unterschiedliche Höhen (Δh) aufweisen, ausgebildet wird.

11. Elektrische Maschine, die Teil eines Netzes für den Transport elektrischer Energie ist und eine Stabilisierungsvorrichtung nach einem der vorhergehenden Ansprüche aufweist.

## Revendications

1. Appareil de stabilisation d'une machine électrique qui fait partie d'un réseau pour le transport d'énergie électrique, comprenant :
- un arbre tournant (10) ayant un volant d'inertie (12) fixé à sa portion centrale,
- un boîtier (14) renfermant ledit volant d'inertie (12) et ayant deux trous (18) pour le passage des portions d'extrémité respectives dudit arbre (10),
- une chambre sous vide (16), dans laquelle ledit volant d'inertie (12) est renfermé par ledit boîtier (14), et
- des moyens assurant une étanchéité hydraulique en rotation au niveau desdits trous (18) pour le passage des portions d'extrémité de l'arbre (10), de tels moyens utilisant un liquide (24) pour assurer l'étanchéité,
ledit appareil étant **caractérisé en ce que** dans un bord (20) s'étendant axialement de chaque trou (18), ou dans une portion de l'extrémité de l'arbre (10) en regard de chaque bord (20), une rainure (22) circonférentielle est réalisée dans laquelle se trouve ledit liquide d'étanchéité (24) et au sein de laquelle un anneau (26) attaché à ladite portion de l'extrémité de l'arbre (10), ou audit bord (20), respectivement, est libre de tourner.

2. Appareil selon la revendication 1, dans lequel ledit liquide d'étanchéité (24) est de l'huile.

3. Appareil selon la revendication 1 ou 2, dans lequel une pluralité d'ailettes (28) font saillie depuis ledit anneau (26).

4. Appareil selon l'une quelconque des revendications précédentes, dans lequel ledit boîtier (14) est formé en tant que disque creux perforé au centre et a une paroi épaissie s'étendant autour de chaque trou (18).

5. Appareil selon l'une quelconque des revendications précédentes, dans lequel le diamètre dudit arbre (10) est entre 200 et 600 mm.

6. Appareil selon l'une quelconque des revendications précédentes, comprenant un dispositif de refroidissement pour ledit liquide d'étanchéité (24).

7. Appareil selon la revendication 6, dans lequel la circulation du liquide d'étanchéité (24) dans ledit dispositif de refroidissement est due à l'effet centrifuge généré par la rotation de l'anneau (26) au sein de la rainure (22).

8. Appareil selon la revendication 6 ou 7, dans lequel ladite rainure (22) a une ouverture (30) pour la sortie du liquide d'étanchéité (24) dans un premier conduit (32) réalisée dans la paroi du boîtier (14) et une ouverture (34) pour l'entrée du liquide d'étanchéité (24) provenant d'un second conduit (36), lesdits conduits (32, 36) faisant partie d'un circuit d'écoulement (38) du liquide d'étanchéité (24) à travers un échangeur de chaleur (40).

9. Appareil selon l'une quelconque des revendications précédentes, dans lequel lesdits anneaux (26) et lesdites rainures (22) circonférentielles se trouvent dans des plans sensiblement orthogonaux à un axe longitudinal (13) de l'arbre tournant (10).

10. Appareil selon l'une quelconque des revendications précédentes, dans lequel, en raison de la rotation de l'arbre (10), une couronne circulaire de liquide d'étanchéité (24) est formée au fond des rainures (22) et autour de la portion distale de chaque anneau (26), entraînée par une force centrifuge de section en U, dont les bras ont des hauteurs (Δh) différentes.

11. Machine électrique qui fait partie d'un réseau pour le transport d'énergie électrique et comprend un appareil de stabilisation selon l'une quelconque des revendications précédentes.
